# EUROPEAN PATENT APPLICATION

(11) **EP 4 550 252 A1**
(43) Date of publication of application: **07.05.2025**
(21) Application number: 24206200.8
(22) Date of filing: 11.10.2024
(51) Int. Cl.: G06T 5/50, G06T 7/20, G06T 13/80, G06T 19/20, G02B 27/01, G06F 3/01, G09G 5/37, G09G 5/397

(54) **IMAGE PROCESSING METHOD AND SYSTEM**

(30) Priority: 03.11.2023 GB 202316921
(71) Applicant: Sony Interactive Entertainment Inc., Tokyo 108-0075 (JP)
(72) Inventor: GUPTA, Rajeev, London, W1F 7LP (GB); CONNOR, Patrick John, London, W1F 7LP (GB)
(74) Representative: D Young & Co LLP

(57) **Abstract**

There is provided an image processing method. The method comprises obtaining a first velocity of one or more parts of a second image frame between a first image frame and the second image frame. The first image frame and the second image frame are frames for display at a head mounted display, HMD. The method further comprises receiving motion data indicative of motion of the HMD between a display time of the first image frame and a display time of the second image frame, adjusting the first velocity based on the received motion data to determine an adjusted velocity of the one or more parts of the second image frame between the first image frame and the second image frame, and performing one or more image processing operations on the second image frame based on the adjusted velocity of the one or more parts of the second image frame.

## Description

### BACKGROUND OF THE INVENTION

### Field of the invention

The present invention relates to a method and a system for image processing.

### Description of the Prior Art

The provision of high-quality image content has been a long-standing problem in content display contexts, with improvements being made constantly. Some of these improvements are realised with improved display devices - such as televisions with increased resolution enabling the display of more detailed imagery, and HDR (high dynamic range) capabilities enabling the display of a greater range of luminances. Other improvements have come with the increasing processing capabilities that are available to a content provider - for instance, increased processing power of games consoles has enabled the generation of more detailed virtual environments.

Increases to image quality may be considered particularly important in some arrangements, such as HMD (head-mountable display) arrangements in which users are intended to be provided with high-quality imagery so as to increase the immersiveness of a virtual or augmented reality experience.

The way in which motion of objects within the presented content is accounted for and portrayed often plays a key role in the perception of the environment by the user and how realistic the environment appears to the user. For example, the quality of motion-blur effects can strongly influence the immersiveness of the content.

It is therefore considered advantageous to accurately track motion within the presented content. However, existing techniques aimed at accurately tracking motion, such as optical flow analysis, are often complex and computationally expensive. For instance, such techniques may require the pairing of points across images of the content, which typically has a high associated computational cost. As a result, such techniques may require the use of specialised and prohibitively expensive hardware. Further, such techniques may not be applicable to virtual or augmented reality content as, even with specialised hardware, tracking motion using such techniques may not allow maintaining the requisite (typically high) target frame rate for virtual or augmented reality content.

It is in the context of the above discussion that the present disclosure arises.

### SUMMARY OF THE INVENTION

Various aspects and features of the present invention are defined in the appended claims and within the text of the accompanying description and include at least:
- In a first aspect, an image processing method is provided in accordance with claim 1.
- In another aspect, an image processing system is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an HMD worn by a user;
- Figure 2 is a schematic plan view of an HMD;
- Figure 3 schematically illustrates the formation of a virtual image by an HMD;
- Figure 4 schematically illustrates another type of display for use in an HMD;
- Figure 5 schematically illustrates a pair of stereoscopic images;
- Figure 6 schematically illustrates an image processing system;
- Figures 7A-7C schematically illustrate an implementation of a image processing method; and
- Figure 8 schematically illustrates an image processing method.

### DESCRIPTION OF THE EMBODIMENTS

An image processing method and system are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

Firstly, a system comprising a head-mounted display (HMD) is described - this is an example of a system which may utilise embodiments of the present disclosure.

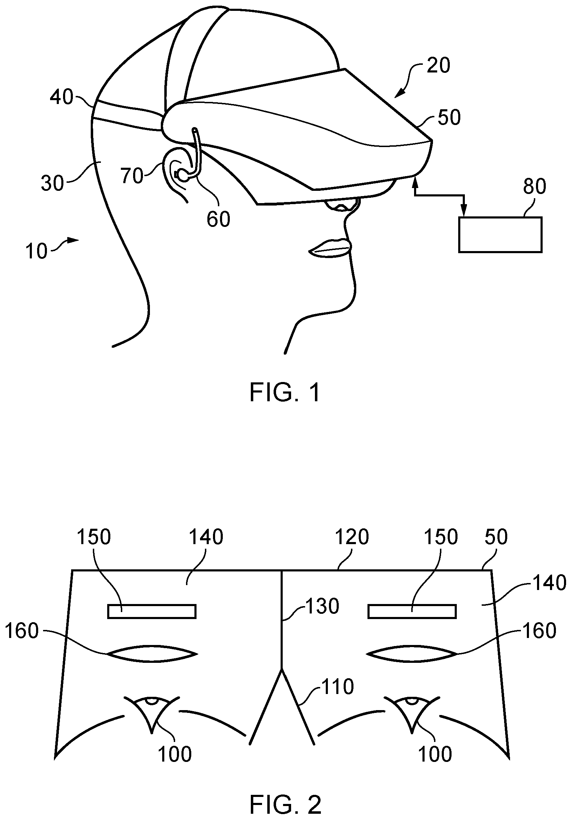

Referring to Figure 1, a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 1 may comprise further features, to be described below in connection with other drawings, but which are not shown in Figure 1 for clarity of this initial explanation.

The HMD of Figure 1 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 may capture images to the front of the HMD, in use. Such images may be used for head tracking purposes, in some embodiments, while it may also be suitable for capturing images for an augmented reality (AR) style experience. A Bluetooth" antenna 124 may provide communication facilities or may simply be arranged as a directional antenna to allow a detection of the direction of a nearby Bluetooth transmitter.

In operation, a video signal is provided for display by the HMD. This could be provided by an external video signal source 80 such as a video games machine or data processing apparatus (such as a personal computer), in which case the signals could be transmitted to the HMD by a wired or a wireless connection. Examples of suitable wireless connections include Bluetooth" connections. Audio signals for the earpieces 60 can be carried by the same connection. Similarly, any control signals passed from the HMD to the video (audio) signal source may be carried by the same connection. Furthermore, a power supply (including one or more batteries and/or being connectable to a mains power outlet) may be linked by a cable to the HMD. Note that the power supply and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the invention are applicable to an HMD having at least one electrical and/or optical cable linking the HMD to another device, such as a power supply and/or a video (and/or audio) signal source. So, embodiments of the invention can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 1 should be treated merely as a schematic representation.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

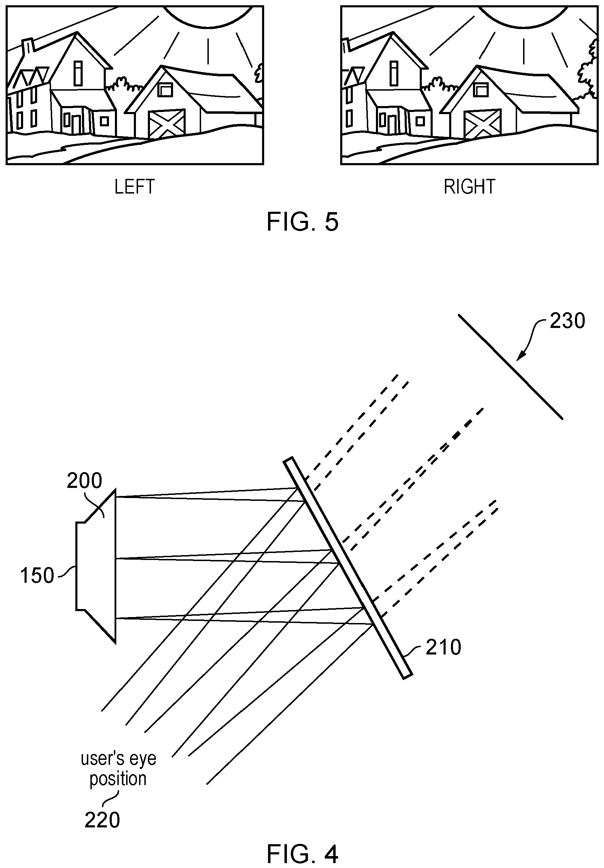

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment. An example of such an arrangement will be described below with reference to Figure 4.

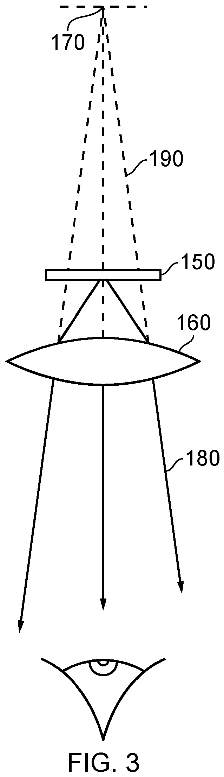

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

Note that the lateral displacements in Figure 5 could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer.

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint needs to track movements with respect to a real or virtual space in which the user is located.

As mentioned above, in some uses of the HMD, such as those associated with virtual reality (VR) or augmented reality (AR) systems, the user's viewpoint needs to track movements with respect to a real or virtual space in which the user is located.

This tracking is carried out by detecting motion of the HMD and varying the apparent viewpoint of the displayed images so that the apparent viewpoint tracks the motion. The detection may be performed using any suitable arrangement (or a combination of such arrangements). Examples include the use of hardware motion detectors (such as accelerometers or gyroscopes), external cameras operable to image the HMD, and outwards-facing cameras mounted onto the HMD.

In embodiments of the present disclosure, one or more images of a virtual environment are generated for display (e.g. via a television or the HMD 20). The generated images are each associated with a virtual camera position.

It will be appreciated that a virtual camera has an associated viewpoint with respect to the virtual environment such that a portion of the virtual environment is included within the field of view of the virtual camera. This viewpoint is defined by a virtual camera position, which may include the location of the virtual camera in the virtual environment and an orientation of the virtual camera with respect to the virtual environment. In some cases, the virtual camera position may also include a magnification (e.g. zoom) of the virtual camera.

The virtual camera may follow a character in the virtual environment to thereby move with respect to the virtual environment. For example, the virtual camera may follow a non-player character (NPC) in a video game or may be controlled responsive to a user input to follow a player-controlled character. In some examples, the virtual camera may provide a first or third person viewpoint of a given character in a game. Alternatively, the virtual camera may have a fixed location in respect to the virtual environment and may be controlled responsive to an input from a spectator (non-playing user) to update an orientation of the virtual camera. Alternatively, the virtual camera may be controlled responsive to an input from a spectator to allow the spectator to change a position for the virtual camera with respect to the virtual environment without the spectator actively participating in a video game. Hence the position (e.g. a location and/or an orientation) of the virtual camera can be updated and the position of the virtual camera may optionally be controlled in response to a user input.

In some examples, the position of the virtual camera may correspond to tracked movements of the HMD 20 worn by a user so that the viewpoint for the virtual camera is updated according to the user's head movements. A location and/or orientation of an HMD can be tracked using one or more image sensors and/or one or more inertial sensors, such as an accelerometer, gyroscope and/or magnetometer. For example, known inside-out and/or outside-in tracking techniques using image sensors mounted on an HMD and/or mounted to capture images including an HMD can be used to track the location and orientation of the HMD. Therefore, in some cases the viewpoint for the virtual camera can be controlled by a user to move with respect to the virtual environment based on movement of an HMD.

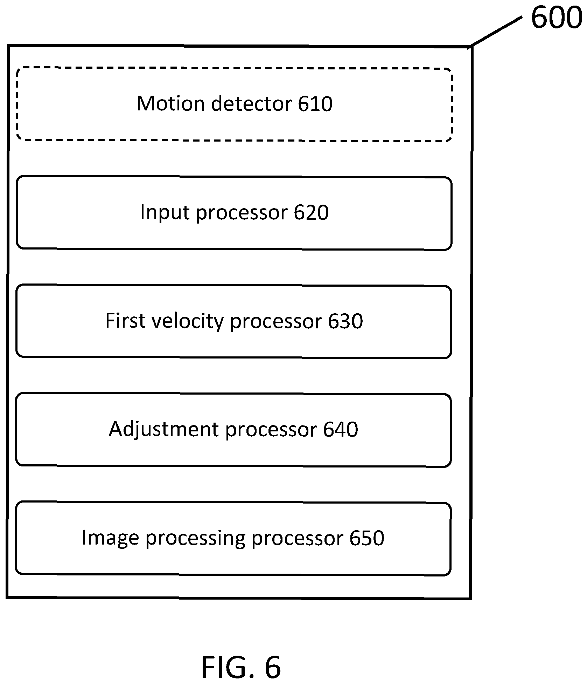

Turning now to Figure 6, embodiments of the present description relate to an image processing system 600 for determining the velocity of one or more parts (e.g. pixels) of an image between two image frames that are displayed using a HMD. The velocity of the image parts can then be used to perform various image processing operations on the image frames, such as motion-blurring or temporal-aliasing, and/or stored for future use (e.g. in an appropriate memory buffer, in some cases referred to as a "velocity buffer").

The image processing system 600 determines the velocity of the image parts by obtaining a first velocity of the image parts (e.g. by retrieving the first velocity from a memory buffer, such as a velocity buffer), and adjusting the first velocity based on motion of the HMD between the display time of the frames (e.g. subtracting a function of the received motion data from the first velocity). This allows improving the accuracy of the determined 'adjusted' velocity of the image parts as the image processing system 600 accounts for motion of the HMD between the image frames which may otherwise distort the velocity determination (e.g. as a result of head motion a pixel may change position on the display in addition to any movement occurring within the environment portrayed in the image frames). As a result, the quality of an image processed based on the adjusted velocity can also be improved, as the image is processed based on more accurate velocity information. For example, improved anti-aliasing processing, or more realistic motion-blurring may be provided.

In addition to improved accuracy, adjusting the first velocity provides an efficient way to determine the velocity of the image parts. The adjustment process is itself computationally efficient, and by adjusting the first velocity, the present approach allows using more efficient and computationally cheaper techniques for determining the 'starting' first velocity of the image parts (e.g. based on rendering a scene of the second image frame twice as described in further detail below). This contrasts with more computationally expensive approaches such as optical flow analysis, which are not required by the present approach.

The present approach thus provides an improved balance between accuracy and efficiency for image processing, as it allows improving the accuracy of determining image part velocity, whilst doing this in a computationally efficient manner.

The present approach is particularly applicable to virtual reality (VR) applications. Users interacting with VR applications often frequently move their head, and it can be difficult to separate movement of objects within the virtual environment from movement of those objects on screen as a result of the user's head motion. As described herein, the present approach allows addressing these challenges by compensating for the head-motion in determining the velocity of the image parts.

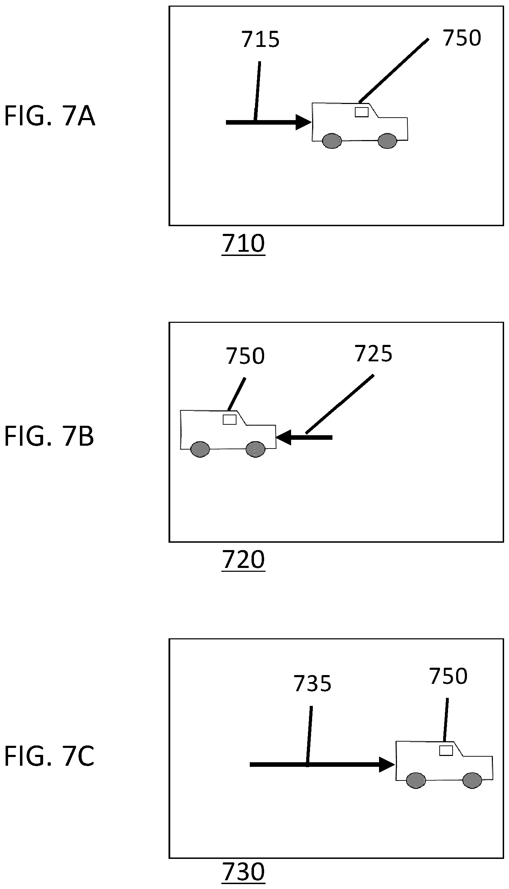

Turning now also to Figures 7A-7C, these figures schematically illustrate example velocities of one or more parts of an image. In Figures 7A-7C, the one or more image parts of an image comprise pixels associated with a car 750 shown in the second image frame.

Figure 7A shows an example illustration 710 of a first velocity 715 of the car 750, before adjustment based on HMD motion. The first velocity 715 may for example be retrieved from a memory buffer, or determined based on motion of the respective parts of the second image frame between the first image frame and the second image frame. As shown in Figure 7A, the first velocity vector 715 indicates that the car 750 has moved to the right between the first and second image frames. However, as shown in Figures 7B-7C, this first velocity is in fact skewed by motion of the HMD and therefore does not accurately reflect motion of the car 750 itself between the image frames.

Figure 7B shows an example illustration 720 of an adjustment factor 725 for adjusting the first velocity of the car 750 based on motion of the HMD. As shown in Figure 7B, the adjustment factor vector 725 indicates that, as a result of the HMD motion between the first and second image frames, the apparent position of the car 750 has moved to the left. For example, such movement of the car 750 to the left may be caused by the user of the HMD moving their head to the right between the first and second image frames. Prior to correction based on the adjustment factor, the first velocity 715 may not accurately reflect the motion of the car 750 between the image frames as it may be distorted by the motion of the HMD.

Figure 7C shows an example illustration 730 of an adjusted velocity 735 of the car 750, determined based on the first velocity 715 and the adjustment factor 725. For example, the adjusted velocity 735 may be determined by subtracting the adjustment factor 725 from the first velocity 715. In this way, apparent motion of the car 750 resulting from motion of the HMD is compensated for and the velocity of the car 750 within the image frames (e.g. within a displayed virtual environment) can be more accurately determined. For instance, in the example of Figures 7A-C, as shown by the adjusted velocity vector 735, the car 750 has in fact moved at a faster velocity to the right than that indicated by the first velocity 715 which was skewed by HMD motion.

It will be appreciated that the term "part" as used herein in relation to an image relates to a sub-part of the image depicting one or more elements in the image space of the image. For example, the one or more parts of an image may each comprise a pixel of the image. The one or more parts of the image (e.g. one or more pixels) may depict one or more elements in the environment (e.g. virtual environment) shown in the image, such as a car, or a human.

It will be appreciated that references herein to motion, e.g. of image parts or of an HMD, between two image frames relate to a change in position in the time interval between the image frames (e.g. the respective times at which the image frames are generated or output (e.g. displayed)). For example, this time interval may be between the time points at which the generation of the respective image frames is initiated, or between the time points at which the image frames are displayed (e.g. as dictated by a predefined frame rate).

It will also be appreciated that references herein to motion, change in position, or velocity of parts of an image between image frames relate to movement of corresponding parts of the image within the image space (e.g. across the display) between the frames. As used herein in relation to image parts, "velocity" preferably represents a measure of motion of a particular point between image frames, the point representing the same element (e.g. object such as a car) in each frame. The velocity of a part of an image may relate to motion of an object (e.g. car within a depicted virtual environment) corresponding to the image part. For example, a velocity of a pixel between a first image frame and a second image frame may relate to a displacement of a pixel (e.g. depicting part of a car) across the display screen between the first and second image frames.

Returning back to Figure 6, this shows an example of an image processing system 600 in accordance with one or more embodiments of the present disclosure.

The image processing system 600 comprises an input processor 620, a first velocity processor 630, an adjustment processor 640, and an image processor 650. The input processor 620 receives (e.g. from a motion detector 610) motion data indicative of motion of an HMD between display times of a first image frame and a second image frame (e.g. consecutive frames of a videogame). The first image frame and the second image frame are for display at the same HMD for which motion data is received. The first velocity processor 630 obtains a first velocity of one or more parts (e.g. pixels) of the second image frame between the first image frame and the second image frame. The adjustment processor 640 adjusts the first velocity based on the received motion data to correct for motion of the image parts caused by motion of the HMD. The image processor 650 performs one or more image processing operations (e.g. motion blurring) on the second image frame based on the adjusted velocity determined by the adjustment processor 640.

The image processing system 600 may optionally further comprise a motion detector 610. It will be appreciated that the motion detector 610 may be provided separately (e.g. as part of separate processing devices) to the processors 620, 630, 640, 650. The motion detector 610 detects motion of the HMD between the first image frame and the second image frame, and transmits the detected motion to the input processor 620.

The image processing system 600 may be provided as part of a processing device, such as a video game console or a computer, or provided as part of an HMD (e.g. the HMD 20) or as part of a server. Each of the processors 620, 630, 640, 650 may, for example, comprise a GPU and/or CPU located in the processing device, HMD, or the server.

In the case where the image processing system 600 is provided as part of a processing device, the input processor 620 may receive the motion data via a wired or wireless communication (e.g. Bluetooth" communication link) from the motion detector 610. The image processor 650 may output the processed second image frame for display to a user by transmitting the processed second image frame to a HMD (e.g. the HMD 20) or to a display unit (e.g. a television) arranged with respect to the user via a wired or wireless communication. In some examples, the image processing system 600 may be provided as part of a server, the input processor 620 may be configured to receive the motion data from the motion detector 610 (or a processing device, such as a personal computer or a game console associated with the motion detector 610) via a wireless communication, and the image processor 650 may be configured to output the processed second image frame for display to the user by communicating image data corresponding to the processed second image frame to the HMD 20 or a display unit arranged with respect to the user.

The functionality of the motion detector 610 and the various processors 620, 630, 640, 650 will now be described in further detail.

The motion detector 610 detects motion of the HMD between the first and second image frames. In other words, the motion detector 610 determined the difference between the position of the HMD for the first frame (e.g. the positon of the HMD at the time the first frame is generated or displayed to the user), and the position of the HMD for the second frame (e.g. the positon of the HMD at the time the second frame is generated displayed to the user).

The motion detector 610 may comprise one or more sensors for detecting motion of the HMD between the first image frame and the second image frame. For example, as described above, the one or more sensors may comprise one or more of: one or more motion sensors (e.g. inertial measurement units (IMUs)), one or more cameras operable to capture images of the HMD, and/or one or more cameras mounted on the HMD and operable to capture images of an environment around the HMD.

Motion of the HMD may for example be caused by the user of the HMD moving their head.

It will be appreciated that the motion detector 610 may use any appropriate sensors and techniques for detecting motion of the HMD. For example, the motion detector 610 may comprise one or more cameras mounted on the HMD and operable to capture images of an environment around the HMD, and the motion detector 610 may use Simultaneous Localization and Mapping (SLAM) techniques to detect motion of the HMD.

Once detected, the motion detector 610 may transmit motion data indicative of motion of the HMD to the input processor 620.

It will be appreciated that the motion detector 610 is an optional component of the image processing system 600. In some cases, the image processing system 600 may be provided without the motion detector 610, and the image processing system 600 may only receive the detected motion data.

The first and second frames are generated for display at the HMD 20. The first and second image frames may for example depict a virtual reality environment displayed by the HMD.

It will be appreciated that the first image frame (also abbreviated as the "first frame") may relate to any frame of a content (e.g. a videogame, or movie), with the term "first" merely indicating a distinction from a subsequent "second" frame. In some cases, the first frame and the second frame may be consecutive frames. Alternatively, the first frame and the second frame may be separated by one or more intervening frames.

The input processor 620 is configured to receive motion data indicative of motion of the HMD (e.g. HMD 20) between the display times of the first frame and the second frame. In other words, the input processor 620 receives data that indicates whether and how the HMD has moved in the time interval between the first and second image frames. The motion data may comprise a direction and magnitude of motion of the HMD, or data (e.g. acceleration data) for determining the direction and magnitude of the HMD's motion. The input processor 620 may receive the motion data from the motion detector 610.

Motion of the HMD may include rotational and/or translational motion of the HMD. For example, motion of the HMD may comprise rotational motion as a result of a user of the HMD rotating their head, and/or translational motion as a result of a user of the HMD moving around their environment (e.g. taking a step forwards).

The motion data received by the input processor 620 is then used by adjustment processor 640 to adjust the first velocity on the basis of the motion data.

In some cases, reprojection of image frames for the HMD may already be performed independently of image part velocity determination. For example, asynchronous reprojection may be performed in the background to fill in dropped frames, for instance when rendering them natively would take too long to maintain a target frame rate. Software (e.g. code for determining HMD motion) and/or hardware (e.g. motion detectors) used for such independently ongoing reprojection may be re-used in the present techniques. Re-using software and/or hardware from the reprojection process can simplify and improve the efficiency of determining the velocity of the image parts. In addition, it can reduce memory usage as data from the reprojection process (e.g. HMD motion data) may be used without requiring such data to be separately stored for determining the velocity of the image parts (e.g. an intermediate 'HMD motion' buffer may not be required as motion data already stored for reprojection may be used).

Alternatively, or in addition, to receiving detected HMD motion, the input processor 620 may receive motion data indicative of a predicted motion of the HMD. The prediction of the HMD motion may be determined by a machine learning model. The machine learning model may for example be trained to predict likely HMD motion based on HMD motion between one or more preceding pairs of frames, and/or characteristics of the current and one or more preceding image frames. For instance, HMD motion data may be collected for users viewing different sequences of images, and the motion data along with corresponding images may be input into the machine learning model for training of the model. The model may be trained based on this training data to predict likely HMD motions for sequences of image frames. The input processor 620 may then receive a prediction of the HMD motion determined by the machine learning model based on the second image frame, the first image frame, and in some cases one or more further preceding images.

The first velocity processor 630 obtains a first velocity of one or more parts of the second image frame (e.g. corresponding parts representing the same element(s) in the first image frame and the second image frame) between the first and second image frames. The first velocity may relate to a velocity of the one or more parts (e.g. one or more pixels of the second image frame) of the second image frame between the virtual camera and virtual environment state for the first image frame and for the second image frame. The first velocity represents motion of the image parts between the frames, without necessarily considering what has caused the motion. For example, as shown in Figure 7A, the first velocity processor 630 may obtain the first velocity 715 of image pixels corresponding to the car 750.

Obtaining the first velocity may comprise retrieving the first velocity from a memory buffer, or determining the first velocity based on motion of the respective parts of the second image frame between the first image frame and the second image frame.

Considering retrieving the first velocity, the first velocity processor 630 may retrieve a previously calculated first velocity from a memory buffer, such as a velocity buffer. The memory buffer may for example be provided as part of the image processing system 600, and/or as part of one or more further external devices. The first velocity stored in the memory buffer may be calculated using the techniques described herein in relation to directly determining the first velocity by the image processing system 600.

Considering determining the first velocity directly by the image processing system 600, the first velocity processor 630 may determine the first velocity of the image parts based on motion of the respective parts of the second image frame between the first image frame and the second image frame. The first velocity may be determined based on data relating to the first and second image frames, for example based on one or both the image frames themselves and/or based on data relating to one or both of the image frames (such as their corresponding virtual camera positions, or depth information (e.g. as stored in a depth buffer)).

Determining the first velocity may comprise generating (e.g. rendering) an image comprising the one or more parts of the second image frame, but using a position of a virtual camera and of the one or more parts of the second image frame from the first image frame, and determining a change in position of the one or more parts of the second image frame between the generated image and the second image frame. Determining the first velocity in this way allows efficiently tracking positions of image elements between frames, as the same image elements are generated (e.g. rendered) and depicted in both the generated image and the second image frame. For example, the position of image elements across these two images may be tracked based on indices of vertices corresponding to those elements. Tracking image part positions in this way allows improving the efficiency of determining the first velocity, as it can remove the need for more computationally complex techniques for mapping between corresponding elements across images such as optical flow analysis.

Generating the image may for example comprise rendering elements (e.g. elements of the virtual environment shown in the image frames) corresponding to the parts of the second image frame for which the velocity is determined, but using a model-view-projection matrix for the first image frame. This allows rendering the one or more parts of the second image frame as they were arranged in the first image frame. Data relating to the position of the image parts may be stored as part of generating of the image. For example, a depth of the image parts in the generated image may be stored in a depth buffer during generation of the image for comparison to a corresponding depth of the image parts in the second image frame.

It will be appreciated that only a geometry of the generated image may be rendered, and that various further steps (such as pixel shading) may be omitted to reduce computational costs. For example, outputs of vertex and/or fragment shaders may be used directly to determine a change in position of image parts between the generated image and the second image frame, and shading of the pixels may be omitted.

Determining the change in position of the one or more parts of the second image frame between the generated image and the second image frame may comprise determining a change in position along the direction of the virtual camera's viewing direction (e.g. in a z-direction parallel to the camera's viewing direction) and/or across the virtual camera's view (e.g. in x- and y- directions perpendicular to the camera's viewing direction). The change in position may for example be determined based on respective depths of the image parts (e.g. as obtained from depth buffers) and screen-space coordinates of the image parts.

In some cases, the change in position may be determined directly based on the first image frame and/or data relating to the first image frame, without generating an image as described above. For example, if the one or more parts of the image are shown in both the first and second image frame, data relating to the position of elements shown in the first and second image frames (e.g. their respective depth buffers) may be compared directly, without requiring a separate image to be generated.

The first velocity may be determined based on the determined change in position and on the time interval between the first and second image frames. The time interval between the frames may for example be calculated by the image processing apparatus 600, and/or may be received by the input processor 620. In some cases, a predefined time interval between frames (e.g. 16.7 milliseconds, corresponding to a target frame rate of 60 frames per second) may be used in determining the velocity of image parts.

Using one or more of the above techniques, the first velocity processor 630 obtains a first velocity of each of the one or more parts (e.g. each pixel) of the second image frame.

The first velocity calculated in this way may be used directly for image processing. However, as discussed above, the first velocity may be inaccurate due to motion of the HMD being wrapped up in the velocity calculation. The present approach addresses this problem by adjusting the first velocity based on the HMD motion, as described herein.

It will be appreciated that the first velocity processor 630 may determine the first velocity at least partly in parallel to the input processor 620 receiving the motion data. This parallelisation allows improving processing speed.

The adjustment processor 640 adjusts the first velocity based on the motion data received by the input processor 620 to determine an adjusted velocity of the one or more parts of the second image frame between the first image frame and the second image frame. For example, as shown in Figures 7A-7C, the adjustment processor 640 may determine the adjusted velocity 735 of image pixels corresponding to the car 750 by subtracting an adjustment factor (e.g. a function of the received motion data) 725 from the first velocity 715.

The adjusted velocity is based on the first velocity but also compensates for the HMD motion between the first and second image frames. This negates the effect of the head motion, leading to a more accurate velocity determination. More accurately determining the velocity of the image parts in this way further allows improving the quality of image processing performed by the image processor 650 based on the velocity.

The first velocity may be adjusted on an image part by image part basis, where each image part is adjusted based on the received motion data. For example, the first velocity may be adjusted on a pixel-by-pixel basis, where the respective first velocities for each pixel are adjusted based on the motion data. The adjustment to each image part (e.g. pixel) may be the same, or may differ across image parts.

Adjusting the first velocity based on the received motion data may comprise subtracting a function of the received motion data from the first velocity. This provides a computationally efficient method for correcting the velocity that does not require complex image processing such as optical flow analysis. The function of the motion data may be an empirically determined function that acts as an adjustment/correction factor for correcting for HMD motion wrapped up in the first velocity. The function of the motion data may take any appropriate form, such as a linear, or quadratic function. This function may be empirically determined based on historical data relating to first velocities of image parts determined using the same techniques as used for determining the first velocity (e.g. rendering the same scene twice), corresponding motion data, and reference 'ground truth' velocities (e.g. as determined using optical flow analysis). In this way, a function for correcting first velocities based on motion data to arrive at, or near, the ground truth velocities may be empirically determined.

The function of the motion data may be based on further variables in addition to the motion data. For instance, the function for adjusting the first velocity of each image part may depend on a first velocity for that image part, or a position of that image part. The position of the image part may relate to a position of that image part within the virtual environment portrayed in the image, and/or a position on the display. For example, the position of the image part may relate to a depth of the image part within the image space (e.g. as obtained from a depth buffer for pixels in the image), and/or the position of the image part on a display (e.g. the image part's distance from the centre of the display). In other words, the position of the image part may relate to a 'z' depth position, and/or 'x' and 'y' directions parallel to the display.

Considering depth of an image part, the adjustment factor (i.e. the output of the function of the motion data) for a given image part may depend on the depth of that image part relative to the virtual camera. For instance, the function may be defined, for example using appropriately selected scaling factors, such that the HMD motion adjustment decreases with increasing depth of the image part. The adjustment for image parts having a smaller depth (e.g. image parts representing objects closer to the virtual camera) may be larger than for image parts having a larger depth (e.g. image parts representing objects further from the virtual camera). This allows efficiently accounting for the parallax effect, and providing a more accurate adjustment.

Considering position on a display, the adjustment factor for a given image part may depend on the position of the image part relative to a centre of the display. For instance, the function may be defined, for example using appropriately selected scaling factors, such that the adjustment factor increases with increasing distance of the image part from a centre of the display (e.g. the HMD). The adjustment factor may be smaller for image parts (e.g. pixels) closer to the centre of the display, and larger for image parts closer to edges of the display. This allows better accounting for perspective distortion which can vary depending on the position of an image part (e.g. pixel) on a display.

Using one or more of the above techniques, the adjustment processor 640 determines an adjusted velocity of each of the one or more parts (e.g. each pixel) of the second image frame.

The adjustment processor 640 may store the output velocity of the one or more parts of the second image frame in memory. For example, the adjustment processor 640 may store the output velocity in a memory buffer. The memory buffer may be the same memory buffer from which the first velocity processor 630 retrieves the first velocity. The image processor 650 may retrieve the output velocity from the storage location (e.g. memory buffer) for use in processing the second image frame.

The adjustment processor 640 may adjust the first velocity by directly adjusting the first velocity stored in the memory buffer (e.g. the buffer from which the first velocity is obtained by the first velocity processor). For example, the adjustment processor 640 may directly apply an adjustment factor determined based on the function of the motion data to the first velocity stored in the memory buffer, thus replacing the first velocity in the memory buffer with the adjusted velocity. This allow reducing memory usage as the same storage resources can be used to store the first and adjusted velocities, for example without requiring an additional memory buffer for the adjusted velocity.

The image processor 650 processes the second image frame in dependence on the adjusted velocity of the parts of the second image frame determined by the adjustment processor 640. The image processor 650 performs one or more image processing operations on the second image frame based on the adjusted velocity of the one or more parts of the second image frame. Because the adjusted velocity is corrected for velocity caused by HMD motion, the image processor 650 can provide improved image processing based on a more accurate velocity of image parts.

The image processor 650 may perform any image processing operations that use data relating to motion of parts of an image between frames. For example, the one or more image processing operations may comprise one or more of motion-blurring, temporal anti-aliasing, depth of field processing, video compression, and/or video stabilization. For example, the adjustment processor 640 may determine the adjusted velocity for each pixel in the second image frame, and the image processor 650 may perform motion-blurring processing on the pixels in dependence on their respective velocities. Alternatively, or in addition, the image processor 650 may use the adjusted velocity in performing video compression of the first and second image frames. For example, the image processor 650 may encode the changes (e.g. velocities or motion vectors) between the first and second frames, instead of encoding the entire second frame itself, in order to reduce the amount of data needed to store the second image frame.

It will be appreciated that the image processor 650 may perform operations on the entire second image frame or one or more parts thereof. For example, motion blur may be applied only to a subset of parts of the image (e.g. pixels) that have an adjusted velocity above a predetermined threshold.

In some cases, the image processor 650 may output the processed second image frame to the HMD for display, e.g. via a wireless or wired communication. For example, the image processor 650 may transmit the second image frame with motion blurring applied thereto to the HMD (e.g. HMD 20) for display by the HMD.

In some cases, the first velocity may be used directly for processing of the second image frame. For example, upon determining that the motion of the HMD is below a predetermined threshold, the image processor 650 may perform one or more image processing operations on the second image frame based on the first velocity, without the adjustment processor 640 determining the adjusted velocity. This allows reducing the amount of computation required when correction based on the HMD motion may be miniscule.

In an example, adjusting the first velocity based on the received motion data may comprise determining a second velocity of the one or more parts of the second image frame based on the received motion data and the second image frame, and aggregating the first velocity and the second velocity (e.g. subtracting the second velocity from the first velocity).

The second velocity may relate to a velocity of the image parts between the first and second image frames relating to motion of the HMD, as opposed to e.g. motion of the corresponding elements within the virtual environment. For example, as shown in Figure 7B, the second velocity 725 of image pixels corresponding to the car 750 may be calculated, which second velocity results from a user of the HMD rotating their head to the right.

Determining the second velocity, and compensating for it by adjusting the first velocity allows improving the accuracy of the output velocity and improving the quality of any image processing performed on the basis of the velocity.

The second velocity may be determined based on the second image frame and the motion data received by the input processor 620.

Determining the second velocity may comprise modifying the second image frame in dependence on the received motion data to generate a modified second image frame, and determining a change in position of the one or more parts of the second image frame between the second image frame and the modified second image frame.

Modifying the second image frame may comprise reprojecting the second image frame to a HMD position for the first image frame, based on the motion data (at some instances herein, this is referred to as "reverse" reprojecting as reprojection back to a previous frame is performed). Reprojecting the second image frame may comprise modifying the apparent virtual camera position (i.e. viewpoint) of the second image frame to reflect the motion of the HMD between the second image frame and the first image frame and the previous position of the HMD in the first image frame. Reprojecting the second image frame may be implemented in a number of ways, for example using a pixel shift, scaling, and/or rotation of the first image frame to account for a modified viewpoint location between the first and second image frames.

The change in position between the second image frame and the modified (e.g. reprojected) second image frame may be determined in a similar manner to that described above in relation to the first velocity. Movement of a given image part (e.g. pixel) may be tracked based on a label for that image part (e.g. a pixel identifier) in the 'original' second image frame and the modified second image frame. The same image part labels (e.g. pixel identifiers) may be used for determining the first velocity, which allows easily aggregating the first and second velocities.

As for the first velocity, the second velocity may then be determined based on the determined change in position and on the time interval between the first and second image frames.

In some cases, the second velocity may be determined for a subset of the one or more parts of the second image frame, and determined second velocities may be interpolated for the remainder of the one or more parts of the second image frame. This allows reducing the computational costs of determining the second velocity.

In some cases, where the one or more parts of the second image frame are displayed in the first image frame, the second velocity may be determined by reprojecting, in dependence on the received motion data, the first image frame to a HMD position for the second image frame; and determining a change in position of the one or more parts of the second image frame between the first image frame and the reprojected first image frame. However, using the first image frame to determine the second 'HMD motion' velocity can make it more computationally expensive to aggregate the first and second velocities as corresponding pixels in the first and second image frames may need to be identified.

In this example, determining the output velocity may comprise aggregating the first and second velocities. The first and second velocities may be aggregated on an image part by image part basis, where the respective first and second velocities for each image part are aggregated. For example, the first and second velocities may be aggregated on a pixel-by-pixel basis, where the respective first and second velocities for each pixel are aggregated.

Aggregating the velocities to compensate for the second velocity may comprise adding or subtracting the first and second velocities, depending on the direction of the first and second velocities (i.e. whether the velocities are determined from the first image frame to the second image frame or vice versa). For example, where the first and second velocities are determined as the velocities from the first image frame to the second image frame, aggregating the velocities may comprise subtracting the second velocity from the first velocity. In other words, the output velocity may be determined as: *(output velocity) = (first velocity)* - *(second velocity).* Alternatively, for example, where the first velocity is determined from the first image frame to the second image frame, but the second velocity is determined from the second image frame to the first image frame, aggregating the velocities may comprise adding the first and second velocities.

In some cases, aggregating the first and second velocities may be based on an empirically determined function for aggregating the velocities. For instance, aggregating the velocities may comprise applying a scaling factor to the first and/or second velocities. For example, in cases where the second velocity is determined based on predicted motion of the HMD, a scaling factor (e.g. of 0.5 or 0.8) may be applied to the second velocity before it is aggregated with (e.g. subtracted from) the first velocity. Alternatively, or in addition, a scaling factor may be applied to the second velocity to scale it down if the second velocity exceeds a predetermined threshold; or in some cases the first velocity may be output directly if the second velocity exceeds a further predetermined threshold. In this way, a reduced degree of (or in some cases no) correction may be provided based on the second velocity, so as to not excessively skew the output velocity in case the second velocity is inaccurate - e.g. if the predicted motion on the basis of which it is determined is inaccurate.

It will be appreciated that while the description primarily refers to a pair of image frames, the present techniques may be applied to determine the velocity of image parts between frames for three or more image frames.

It will also be appreciated that an adjusted velocity determined using the present techniques is applicable beyond processing images based on the adjusted velocity. For example, the image processing system 600 may track velocities of image parts across image frames to then analyse motion of objects in the image space. For instance, the image processing system 600 may calculate statistics on the velocities of objects (e.g. football players in a videogame) over the course of the content (e.g. a match of a football videogame). These statistics may then be transmitted to a server for storage, or displayed to the user (e.g. via the HMD).

It will also be appreciated that the techniques described herein may be applied to VR content. For example, the first and second image frames may each comprise a pair of images (e.g. a stereoscopic image pair). The velocity of the image parts may be determined for one of the pair of images, and the result applied to process both images. Alternatively, the velocity of the image parts may be separately determined for both images of the pair of images. The image processor 650 may output both images to a display device (e.g. the HMD 20).

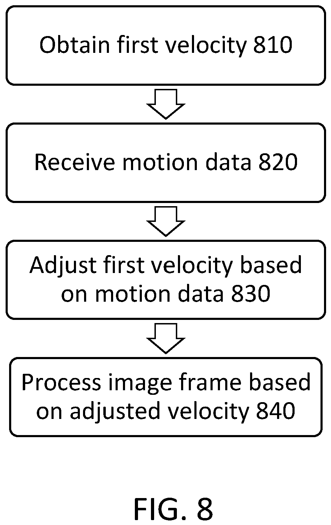

Turning now to Figure 8, in a summary embodiment of the present invention a method of image processing comprises the following steps.

A step 810 comprises obtaining a first velocity of one or more parts of a second image frame between a first image frame and the second image frame, where the first image frame and the second image frame are frames for display at a head mounted display, HMD, as described elsewhere herein.

A step 820 comprises receiving motion data indicative of motion of the HMD between a display time of the first image frame and a display time of the second image frame, as described elsewhere herein.

A step 830 comprises adjusting the first velocity based on the received motion data to determine an adjusted velocity of the one or more parts of the second image frame between the first image frame and the second image frame, as described elsewhere herein.

A step 840 comprises performing one or more image processing operations on the second image frame based on the adjusted velocity of the one or more parts of the second image frame, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- the one or more image processing operations comprise one or more selected from the list consisting of: motion-blurring, temporal anti-aliasing, and depth of field processing, as described elsewhere herein;
- the method further comprises outputting the processed second image frame to the HMD for display, as described elsewhere herein;
- the step of adjusting 830 the first velocity based on the received motion data comprises subtracting a function of the motion data from the first velocity, as described elsewhere herein;
   - in this case, optionally for each image part of the one or more parts of the second image frame, the function of the motion data is further based on a position of the image part, as described elsewhere herein;
- the step of obtaining 810 the first velocity comprises retrieving the first velocity from a memory buffer, as described elsewhere herein;
   - in this case, optionally the step of adjusting 830 the first velocity comprises directly adjusting the first velocity stored in the memory buffer, as described elsewhere herein;
- the step of obtaining 810 the first velocity comprises determining the first velocity based on motion of the respective parts of the second image frame between the first image frame and the second image frame, as described elsewhere herein;
   - in this case, optionally determining the first velocity comprises: generating an image comprising the one or more parts of the second image frame, using a position of the one or more parts of the second image frame and of a virtual camera from the first image frame; and determining a change in position of the one or more parts of the second image frame between the generated image and the second image frame, as described elsewhere herein;
- each part of the second image frame comprises a pixel of the second image frame, as described elsewhere herein;
- the method further comprises storing the adjusted velocity of the one or more parts of the second image frame in a memory buffer, as described elsewhere herein;
- the method further comprises, upon determining that the motion of the HMD is below a predetermined threshold, performing one or more image processing operations on the second image frame based on the first velocity, without adjusting the first velocity, as described elsewhere herein;
- the method further comprises detecting the motion data using one or more sensors, wherein the one or more sensors comprise one or more selected from the list consisting of: one or more motion sensors, one or more cameras operable to capture images of the HMD, and one or more cameras mounted on the HMD and operable to capture images of an environment around the HMD, as described elsewhere herein; and
- the method further comprises reprojecting the first image frame to a HMD position for the second image frame, based on the motion data
   - in this case, optionally, outputting the reprojected first image frame for display to the HMD instead of the second image frame.
- the first image frame and the second image frame are frames for a videogame, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence referring back to Figure 6, in a summary embodiment of the present invention, an image processing system 600 may comprise the following.

A first velocity processor 630 (for example a CPU of a processing device, HMD, or server) configured (for example by suitable software instruction) to obtain a first velocity of one or more parts of a second image frame between a first image frame and the second image frame, where the first image frame and the second image frame are frames for display at a head mounted display, HMD, as described elsewhere herein.

An input processor 620 (for example a CPU of a processing device, HMD, or server) configured (for example by suitable software instruction) to receive motion data indicative of motion of the HMD between a display time of the first image frame and a display time of the second image frame, as described elsewhere herein.

An adjustment processor 640 (for example a CPU of a processing device, HMD, or server) configured (for example by suitable software instruction) to adjust the first velocity based on the received motion data to determine an adjusted velocity of the one or more parts of the second image frame between the first image frame and the second image frame, as described elsewhere herein.

An image processor 650 (for example a CPU of a processing device, HMD, or server) configured (for example by suitable software instruction) to perform one or more image processing operations on the second image frame based on the adjusted velocity of the one or more parts of the second image frame, as described elsewhere herein.

Optionally, the image processing system 600 may further comprise a motion detector 610 configured to detect the motion data using one or more sensors, where the one or more sensors comprise one or more selected from the list consisting of: one or more motion sensors, one or more cameras operable to capture images of the HMD, and one or more cameras mounted on the HMD and operable to capture images of an environment around the HMD.

It will be appreciated that the above system 600, operating under suitable software instruction, may implement the methods and techniques described herein.

Of course, the functionality of these processors may be realised by any suitable number of processors located at any suitable number of devices and any suitable number of devices as appropriate rather than requiring a one-to-one mapping between the functionality and a device or processor.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image processing method comprising:
obtaining a first velocity of one or more parts of a second image frame between a first image frame and the second image frame, wherein the first image frame and the second image frame are frames for display at a head mounted display, HMD;
receiving motion data indicative of motion of the HMD between a display time of the first image frame and a display time of the second image frame;
adjusting the first velocity based on the received motion data to determine an adjusted velocity of the one or more parts of the second image frame between the first image frame and the second image frame; and
performing one or more image processing operations on the second image frame based on the adjusted velocity of the one or more parts of the second image frame.

2. The method of claim 1, wherein the one or more image processing operations comprise one or more selected from the list consisting of: motion-blurring, temporal anti-aliasing, and depth of field processing.

3. The method of claim 1 or 2, further comprising outputting the processed second image frame to the HMD for display.

4. The method of any preceding claim, wherein adjusting the first velocity based on the received motion data comprises subtracting a function of the motion data from the first velocity.

5. The method of claim 4, wherein, for each image part of the one or more parts of the second image frame, the function of the motion data is further based on a position of the image part.

6. The method of any preceding claim, wherein obtaining the first velocity comprises retrieving the first velocity from a memory buffer.

7. The method of claim 6, wherein adjusting the first velocity comprises directly adjusting the first velocity stored in the memory buffer.

8. The method of any of claims 1 to 5, wherein obtaining the first velocity comprises determining the first velocity based on motion of the respective parts of the second image frame between the first image frame and the second image frame.

9. The method of claim 8, wherein determining the first velocity comprises: generating an image comprising the one or more parts of the second image frame, using a position of the one or more parts of the second image frame and of a virtual camera from the first image frame; and determining a change in position of the one or more parts of the second image frame between the generated image and the second image frame.

10. The method of any preceding claim, wherein each part of the second image frame comprises a pixel of the second image frame.

11. The method of any preceding claim, further comprising storing the adjusted velocity of the one or more parts of the second image frame in a memory buffer.

12. The method of any preceding claim, further comprising, upon determining that the motion of the HMD is below a predetermined threshold, performing one or more image processing operations on the second image frame based on the first velocity, without adjusting the first velocity.

13. The method of any preceding claim, further comprising detecting the motion data using one or more sensors, wherein the one or more sensors comprise one or more selected from the list consisting of: one or more motion sensors, one or more cameras operable to capture images of the HMD, and one or more cameras mounted on the HMD and operable to capture images of an environment around the HMD.

14. A computer program comprising computer executable instructions adapted to cause a computer system to perform the method of any one of the preceding claims.

15. An image processing system comprising:
a first velocity processor configured to obtain a first velocity of one or more parts of a second image frame between a first image frame and the second image frame, wherein the first image frame and the second image frame are frames for display at a head mounted display, HMD;
an input processor configured to receive motion data indicative of motion of the HMD between a display time of the first image frame and a display time of the second image frame;
an adjustment processor configured to adjust the first velocity based on the received motion data to determine an adjusted velocity of the one or more parts of the second image frame between the first image frame and the second image frame; and
an image processor configured to perform one or more image processing operations on the second image frame based on the adjusted velocity of the one or more parts of the second image frame.
